# FASCICULE DE BREVET EUROPEEN

(11) **EP 1 876 806 B1**
(45) Date de publication et mention de la délivrance du brevet: **01.12.2010**
(21) Numéro de dépôt: 07111720.4
(22) Date de dépôt: 04.07.2007
(51) Int. Cl.: H04M 3/436

(54) **Procédé de gestion d'une communication, permettant de traiter des appels prioritaires**
Verfahren zur Verwaltung einer Kommunikation, das das Verarbeiten von vorrangigen Anrufen ermöglicht
Communication management method, allowing priority calls to be handled

(30) Priorité: 07.07.2006 FR 0652867
(43) Date de publication de la demande: 09.01.2008
(73) Titulaire: Alcatel Lucent, 75008 Paris (FR)
(72) Inventeur: Bonnaud, Fabrice, 29260, LE FOLGOET (FR); Cournut, Stéphane, 29200, BREST (FR)
(74) Mandataire: Hedarchet, Stéphane

(56) Documents cités:
- US-A1- 5 029 196
- US-A1- 5 778 304
- AXEL KÜPPER: "Location-based Services - Fundamentals and Operation" 2005, JOHN WILEY & SONS,LTD , CHICHESTER, WEST SUSSEX, ENGLAND , XP002425474 * pages 288-290, alinéas 11.2,11.2.1; figure 11.9 *

## Description

L'invention a trait à la gestion des communications.

Les réseaux de communication modernes sont équipés de serveurs d'appel qui gèrent les communications entre des terminaux initiateurs d'appels (dénommés terminaux appelants) et des terminaux destinataires des appels (dénommés terminaux appelés). La gestion d'un appel comprend ordinairement la réception de l'appel par le serveur, l'identification du terminal appelé et le transfert de l'appel au terminal appelé.

Les fonctionnalités des réseaux modernes permettent d'adjoindre à ces possibilités basiques des fonctionnalités supplémentaires permettant d'optimiser les flux, généralement dans le but d'accroître les performances du réseau, et par voie de conséquence d'optimiser la productivité de l'entreprise qui en est équipée.

Lorsqu'un appel est passé depuis un terminal appelant à destination d'un terminal appelé, une alternative se présente : soit la communication est établie entre le terminal appelant et le terminal appelé, soit elle ne l'est pas. La communication entre le terminal appelant et le terminal appelé est établie soit lorsque, le terminal étant libre, le destinataire décroche et prend l'appel, soit lorsque, le terminal étant occupé, le destinataire utilise la fonction double appel. Au contraire, la communication entre le terminal appelant et le terminal appelé n'est pas établie dans les cas suivants :
- le destinataire est absent ;
- le destinataire est présent mais ne souhaite ou ne peut pas répondre ;
- le terminal est occupé ; le destinataire ignore l'appel ou ne souhaite pas y répondre, pour des raisons personnelles ou techniques (tel que l'absence sur le terminal appelé de fonction de présentation de l'appel ou de double appel).

Dans ces cas-là, l'appel est alors, selon le paramétrage du réseau, mis en attente, basculé vers une messagerie vocale, transféré vers un poste secondaire, ou simplement rejeté.

Un inconvénient de ce mode de fonctionnement est que l'urgence des appels n'est pas prise en compte. Certes, la fonction de présentation du numéro permet, dans certains cas, de gérer les priorités mais elle suppose que le destinataire de l'appel soit en mesure d'affecter une priorité à un numéro qui se présente. En pratique, les usagers n'ont en tête que peu de numéros et n'ont par conséquent par conscience des priorités. Il est possible d'automatiser la gestion des appels en fonction du numéro du terminal appelant, mais cela nécessite de mémoriser un nombre considérable de numéros et de leur affecter à chacun un ordre de priorité, ce qui est fastidieux et ne saurait tenir compte de la diversité des situations pouvant se produire.

On a déjà tenté par le passé de remédier à ce problème. Le document US 5 029 196 décrit l'application de règles de routage en fonction de l'identification de l'appelant.Le document US 6 389 287 propose un procédé dans lequel une priorité est donnée à un appel selon des critères de distance. Ce procédé suppose toutefois que la distance entre le terminal appelé et le terminal appelant soit calculée. Il ne s'agit toutefois qu'une solution partielle au problème exposé ci-dessus. En effet, l'urgence d'un appel peut ne pas dépendre de la distance entre le terminal appelant et le terminal appelé. En pratique, ces deux paramètres sont même fréquemment décorrélés.

L'invention vise à remédier notamment à ces inconvénients, en proposant un procédé de communication permettant de gérer les communications de manière à la fois plus simple et plus efficace.

A cet effet, l'invention propose, en premier lieu, un procédé de gestion d'une communication, qui comprend les opérations suivantes :
- réception par un serveur d'un appel en provenance d'un terminal appelant, à destination d'un terminal appelé ;
- interrogation par le serveur d'une base de données de localisation ;
- détermination de la localisation du terminal appelant ;
- interrogation d'une base de données cartographique comprenant au moins une zone géographique dite d'appel prioritaire ;
- détermination de l'appartenance de la localisation du terminal appelant à la zone d'appel prioritaire ;

Il est ainsi possible de filtrer les appels en fonction de critères simples, en accordant à ceux dont la priorité correspond à un critère géographique prédéfini un traitement particulier, les appels non prioritaires étant traités différemment.

Ainsi, si la localisation du terminal appelant appartient à la zone d'appel prioritaire, l'appel peut être transféré vers le terminal appelé, par exemple avec préemption de ressources de celui-ci.

Ainsi, si la localisation du terminal appelant n'appartient pas à la zone d'appel prioritaire, l'appel peut être transféré vers un terminal secondaire, choisi par exemple parmi un ensemble prédéfini de terminaux et éventuellement avec préemption de ressources du terminal secondaire, ou encore vers une boîte vocale.

L'invention propose, en second lieu, un système de gestion d'une communication, qui comprend :
- une base de données de localisation ;
- une base de données cartographique comprenant au moins une zone géographique dite d'appel prioritaire ;
- un serveur d'appel, relié à la base de données de localisation et à la base de données cartographique, ce serveur étant apte à recevoir un appel d'un terminal appelant à destination d'un terminal appelé et comprenant des moyens pour déterminer l'appartenance de la localisation du terminal appelant à la zone d'appel prioritaire ;
- un routeur relié d'une part au serveur d'appel, et d'autre part à au moins un terminal.

L'invention propose en troisième lieu un produit programme d'ordinateur, qui comprend des instructions pour :
- interroger une base de données de localisation ;
- en déduire la localisation d'un terminal appelant passant un appel à destination d'un terminal appelé ;
- interroger une base de données cartographique comprenant au moins une zone géographique dite d'appel prioritaire ;
- déterminer l'appartenance de la localisation du terminal appelant à la zone d'appel prioritaire ;
- si la localisation du terminal appelant appartient à la zone d'appel prioritaire, ordonner le transfert de l'appel vers le terminal appelé.

D'autres objets et avantages de l'invention apparaîtront à la lumière de la description faite ci-après en référence aux dessins annexés dans lesquels :
- la figure 1 est un schéma montrant de manière synthétique un système de communication selon l'invention ;

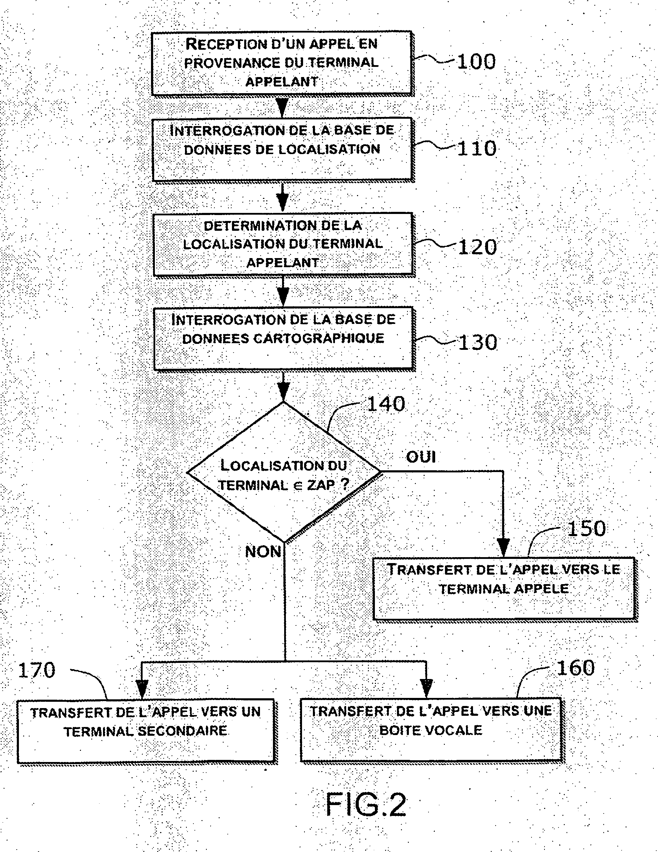

- la figure 2 est un schéma synoptique montrant plusieurs étapes d'un procédé de communication selon l'invention.

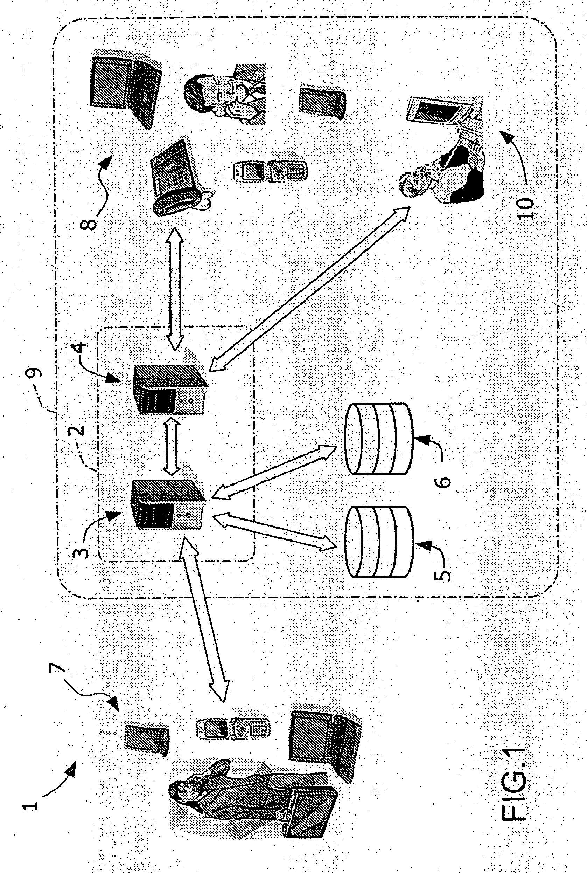

Sur la figure 1 est représenté un système **1** de communication sous la forme d'un réseau de type client/serveur et comprenant un noeud central **2** de communication constitué d'un doublet de serveurs, à savoir un serveur d'appel **3** et un serveur routeur **4** relié au serveur d'appel.

Le réseau **1** comprend également une base de données **5** de localisation, associée à un système de géolocalisation tel que GPS (*Global Positioning System*) et reliée au serveur d'appel **3** auquel elle communique, sur présentation d'une requête de localisation d'une entité quelconque, la localisation géographique (par exemple sous forme de coordonnées) de cette entité.

Le réseau **1** comprend en outre une base de données **6** cartographique, qui comprend au moins une zone géographique prédéterminée d'où sont susceptibles d'être reçus par le serveur d'appel **3** des appels urgents en provenance de terminaux appelants, à destination de terminaux appelés. Dans ce qui suit, une telle zone est dénommée zone d'appel prioritaire (ZAP). La base de données cartographique **6** peut contenir plusieurs ZAP, disjointes ou sécantes.

Concrètement, une ZAP peut être (liste non exhaustive) :
- un hôpital,
- une administration tel qu'hôtel de police, préfecture ou mairie,
- un site particulier au sein d'une même entreprise ou au sein d'un réseau interentreprises,
- un pays ou une zone régionale particulière.

Le réseau **1** peut être physiquement implanté au sein d'une entreprise **9** et gérer à la fois les communications internes, entre terminaux **8** fixes ou mobiles, et les communications externes, soit reçues soit à destination de terminaux **7** externes. Un terminal **7, 8** peut se présenter sous la forme d'un téléphone fixe, d'un téléphone cellulaire, d'un Smartphone, d'assistant personnel (PDA) communicant, ou encore d'un ordinateur portable communicant (liste non exhaustive), comme cela est représenté sur la figure 1.

Le serveur d'appel **3** est programmé pour gérer des priorités d'appel en fonction de la localisation d'un terminal appelant 7, selon que cette localisation se trouve ou non dans une ZAP.

L'architecture du réseau **1,** et la programmation du serveur d'appel **3,** permettent de mettre en oeuvre un procédé de gestion d'une communication, que l'on décrit à présent.

Une première opération **100** consiste, pour le serveur d'appel, à recevoir un appel en provenance d'un terminal appelant **7** (par exemple externe à l'entreprise), à destination d'un terminal appelé **8** (par exemple interne à l'entreprise).

Une seconde opération **110** consiste pour le serveur d'appel **3** à interroger la base de données de localisation **5** en lui transmettant une requête de localisation du terminal appelant **7.**

Les informations retournées par la base de données **5** permettent au serveur d'appel **3** de déterminer **(120)** la localisation du terminal appelant **7.**

Une quatrième opération **130** consiste pour le serveur d'appel **3** à interroger la base de données cartographique **6** afin de comparer la localisation du terminal appelant **7** avec la (ou les) ZAP mémorisée(s).

Une cinquième opération **140** consiste à déterminer si la localisation du terminal appelant **7** appartient à une ZAP.

Si tel est le cas, ce qui signifie que l'appel doit être traité comme prioritaire, une sixième opération **150** consiste pour le serveur d'appel **3** à accorder à l'appel un traitement particulier différent des appels non prioritaires. En l'occurrence, ce traitement consiste à transférer l'appel, via le serveur routeur **4,** au terminal appelé **8.** Subsidiairement, il est possible de définir des règles de préemption de ressources. Ainsi, on peut définir une règle de préemption en vertu de laquelle, lorsque le terminal appelé **8** est occupé par une communication non prioritaire, celle-ci est coupée ou mise en attente, de sorte à initier d'office une communication répondant à l'appel prioritaire.

Si au contraire la localisation du terminal appelant **7** n'appartient pas à une ZAP, ce qui signifie que l'appel ne doit pas être traité comme prioritaire, l'appel est traité différemment. Une première possibilité consiste, lorsque des règles de préemption ont été définies, à transférer l'appel au terminal appelé 8 sans préemption. Une autre possibilité consiste à ne pas transférer l'appel vers le terminal appelé **8.**

Dans ce cas, une première possibilité **(160)** consiste pour le serveur d'appel **3** à transférer l'appel, via le serveur routeur **4,** vers une boîte vocale. Une deuxième possibilité **(170)** consiste pour le serveur d'appel **3** à transférer l'appel, via le serveur routeur **4,** vers un terminal secondaire **10,** correspondant par exemple à un membre de l'équipe de la personne appelée, ou au secrétariat auquel celle-ci est rattachée.

Afin de permettre la mise en oeuvre de ce procédé, un programme d'ordinateur peut être implémenté sur le serveur d'appel **3,** ce programme comprenant des instructions pour :
- interroger la base de données de localisation **5 ;**
- en déduire la localisation du terminal appelant **7 ;**
- interroger la base de données cartographique **6 ;**
- déterminer l'appartenance de la localisation du terminal appelant **7** à une ZAP ;
- si la localisation du terminal appelant **7** appartient à une ZAP, ordonner le transfert de l'appel vers le terminal appelé **8.**

Diverses variantes peuvent être envisagées. Il est ainsi possible, au lieu de (ou en combinaison avec) un système GPS, de prévoir une instruction ad hoc de la base de données de localisation **5,** chaque personne susceptible de passer un appel en provenance d'une ZAP fournissant les coordonnées (par exemple l'adresse) du lieu où elle compte se rendre et d'où sera passé son prochain appel, afin que celui-ci puisse être traité comme prioritaire.

## Revendications

1. Procédé de gestion d'une communication comprenant les opérations suivantes:
- réception par un serveur (**3**) d'un appel en provenance d'un terminal appelant (**7**), à destination d'un terminal appelé (**8**) :
- interrogation par le serveur (**3**) d'une base d.e données (**5**) de localisation ;
- détermination de la localisation du terminal appelant (**7**) ;
- interrogation d'une base de données (**6**) cartographique comprenant au moins une zone géographique dite d'appel prioritaire ;
- détermination de l'appartenance ou non de la localisation du terminal appelant (**7**) à la zone d'appel prioritaire ;
- si la localisation du terminal appelant appartient à la zone d'appel prioritaire, définition de règles de préemption de ressources au profit de l'appel émanant du terminal appelant.

2. Procédé selon la revendication 1, qui comprend, si la localisation du terminal appelant (**7**) appartient à la zone d'appel prioritaire, le transfert de l'appel vers le terminal appelé (**8**).

3. Procédé selon la revendication 1, qui comprend, si la localisation du terminal appelant (**7**) n'appartient pas à la zone d'appel prioritaire, une opération de transfert vers un terminal secondaire (**10**).

4. Procédé selon la revendication 3, dans lequel le terminal secondaire (**10**) est choisi parmi un ensemble prédéfini de terminaux.

5. Procédé selon l'une des revendications 2 à 4, dans lequel l'appel en provenance du terminal appelant (**7**) préempte des ressources du terminal (**8, 10**) vers lequel l'appel est transféré.

6. Procédé selon la revendication 1, qui comprend, si la localisation du terminai appelant (**7**) n'appartient pas à la zone d'appel prioritaire, une opération de transfert vers une boîte vocale.

7. Système de gestion d'une communication, comprenant
- une base de données (**5**) de localisation ;
- une base de données (**6**) cartographique comprenant au moins une zone géographique dite d'appel prioritaire ;
- un serveur d'appel (**3**), relié à la base de données (**5**) de localisation et à la base de données (**6**) cartographique, ce serveur (**3**) étant apte à recevoir un appel d'un terminal appelant (**7**) à destination d'un terminal appelé (**8**) et comprenant des moyens pour déterminer l'appartenance de la localisation du terminal appelant (**7**) à la zone d'appel prioritaire :
- un rouleur (**4**) relié d'une part au serveur d'appel (**3**), et d'autre part à au moins un terminal **(8),**
- si la localisation du terminal appelant apparient à la zone d'appel prioritaire, des moyens de définition des règles de préemption de ressources au profit de l'appel émanant du terminal appelant.

8. Produit programme d'ordinateur, qui comprend des instructions pour :
- interroger une base de données (**5**) de localisation ;
- en déduire la localisation d'un terminal appelant (**7**) passant un appel à destination d'un terminal appelé (**8**) ;
- interroger une base de données (**6**) cartographique comprenant au moins une zone géographique dite d'appel prioritaire ;
- déterminer l'appartenance de la localisation du terminal appelant (**7**) à la zone d'appel prioritaire ;
- si la localisation du terminal appelant (**7**) appartient à la zone d'appel prioritaire, ordonner le transfert de l'appel vers le terminal appelé (**8**)
- si la localisation du terminal appelant appartient à la zone d'appel prioritaire, définir des régies de préemption de ressources au profit de l'appel émanant du terminal appelant.

## Claims

1. A method for managing communication, comprising the following operations:
- a server (3) receiving a call from a calling terminal (7), destined to a called terminal (8);
- the server (3) querying a location database (5);
- determining the location of the calling terminal (7);
- querying a map database (6) comprising at least one priority-call geographic area;
- determining whether the calling terminal's location (7) belongs to the priority call geographic area:
- if the calling terminal's location belongs to the priority call area, defining resource preemption rules for the call coming from the calling terminal.

2. A method according to claim 1, which comprises, if the calling terminal's location (7) belongs to the priority call area, the call being transferred to the called terminal (8).

3. A method according to claim 1, which comprises, if the calling terminal's location (7) does not belong to the priority call area, a transfer operation to a secondary terminal (10).

4. A method according to claim 3, wherein the secondary terminal (10) is chosen from a predefined set of terminals.

5. A method according to one of the claims 2 to 4, wherein the call coming from the calling terminal (7) preempts the resources of the terminal (8, 10) to which the call is being transferred

6. A method according to claim 1, which comprises, if the calling terminal's location (7) does not belong to the priority call area, a transfer operation to a voicemail box.

7. A communication management system, comprising:
- a location database (5);
- querying a map database (6) comprising at least one priority-call geographic area;
- a call server (3) connected to the location database (5) and to the map database (6), this server (3) being capable of receiving a call from a calling terminal (7) to a called terminal (8) and comprising means for determining whether the calling terminal's (7) location belongs to the priority call area,
- a router (4) connected to the call server (3) and to at least one terminal (8);
- if the calling terminal's location belongs to the priority call area, means for defining resource preemption rules for the call coming from the calling terminal.

8. A computer program product, which comprises instructions for
- querying a location database (5);
- deducing from it the location of a calling terminal (7) masking a call to a called terminal (8);
- querying a map database (6) comprising at least one priority-call geographic area;
- determining whether or not the calling terminal's (7) location belongs to the priority call area;
- if the calling terminal's (7) location belongs to the priority call area, ordering the call to be transferred to the called terminal (8).
- if the calling terminal's location belongs to the priority call area, defining resource preemption rules for the call coming from the calling terminal.

## Patentansprüche

1. Verfahren zur Verwaltung einer Verbindung, welches die folgenden Vorgänge umfasst :
- Empfangen, an einem Server (3), eines Anrufs von einem anrufenden Endgerät (7) an ein angerufendes Endgerät (8);
- Abfragen, durch den Server (3), einer Standortdatenbank (5);
- Bestimmen des Standorts des anrufenden Endgeräts (7);
- Abfragen einer kartografischen Datenbank (6), welche mindestens eine geografische Zone, die sogenannte Zone für prioritäre Anrufe, enthält;
- Ermitteln, ob der Standort des anrufenden Endgeräts (7) der Zone für prioritäre Anrufe angehört oder nicht;
- Wenn der Standort des anrufenden Endgeräts der Zone für prioritäre Anrufe angehört, Definieren der Ressourcen-Vorbelegungsregeln zugunsten des von dem anrufenden Endgerät eingehenden Anrufs.

2. Verfahren nach Anspruch 1, welches, wenn der Standort des anrufenden Endgeräts (7) der Zone für prioritäre Anrufe angehört, das Weiterleiten des Anrufs an das angerufene Endgerät (8) umfasst.

3. Verfahren nach Anspruch 1, welches, wenn der Standort des anrufenden Endgeräts (7) nicht der Zone für prioritäre Anrufe angehört, einen Weiterleitungsvorgang an ein sekundäres Endgerät (8) umfasst.

4. Verfahren nach Anspruch 3, wobei das sekundäre Endgerät (10) unter einem vordefinierten Satz von Endgeräten ausgewählt wird.

5. Verfahren nach einem der Ansprüche 2 bis 4, wobei der von dem anrufenden Endgerät (7) eingehende Anruf Ressourcen des Endgeräts (8, 10), an welches der Anruf weitergeleitet wird, vorbelegt.

6. Verfahren nach Anspruch 1, welches, wenn der Standort des anrufenden Endgeräts (7) nicht der Zone für prioritäre Anrufe angehört, einen Weiterleitungsvorgang an eine Sprach-Mailbox umfasst.

7. System zur Verwaltung einer Verbindung, umfassend:
- Eine Standortdatenbank (5);
- eine kartografische Datenbank (6), welche mindestens eine geografische Zone, die sogenannte Zone für prioritäre Anrufe, enthält.
- einen Anrufserver (3), welcher mit der Standortdatenbank (5) und mit der kartografischen Datenbank (6) verbunden ist, wobei dieser Server (3) dazu ausgelegt ist, einen Anruf von einem anrufenden Endgerät (7) an ein angerufenes Endgerät (8) zu empfangen, und Mittel zum Ermitteln der Zugehörigkeit des Standorts des anrufenden Endgeräts (7) zu der Zone für prioritäre Anrufe umfasst;
- einen Router (4), welcher einerseits mit dem Anrufserver (3) und andererseits mit mindestens einem Endgerät (8) verbunden ist;
- wenn der Standort des anrufenden Endgeräts der Zone für prioritäre Anrufe angehört, Mittel zum Definieren der Ressourcen-Vorbelegungsregeln zugunsten des von dem anrufenden Endgerät eingehenden Anrufs.

8. Computerprugramm-Produkt, welches Befehle umfasst, um
- eine Standortdatenbank (5) abzufragen;
- daraus den Standort eines anrufenden Endgeräts (7), welches einen Anruf an ein angerufendes Endgerät (8) tätigt, abzuleiten;
- eine Standortdatenbank (6), welche mindestens eine geografische Zone, die sogenannte Zone für prioritäre Anrufe, enthält, abzufragen;
- die Zugehörigkeit des Standorts des anrufenden Endgeräts (7) zu der Zone für prioritäre Anrufe zu ermitteln;
- wenn der Standort des anrufenden Endgeräts (7) der Zone für prioritäre Anrufe angehört, das Weiterleiten des Anrufs an das angerufene Endgerät (8) zu befehlen;
- wenn der Standort des anrufenden Endgeräts (7) der Zone für prioritäre Anrufe angehört, die Ressourcen-Vorbelegungsregeln zugunsten des von dem anrufenden Endgerät eingehenden Anrufs zu definieren.
